# DEMANDE DE BREVET EUROPEEN

(11) **EP 0 878 696 A1**
(43) Date de publication de la demande: **18.11.1998**
(21) Numéro de dépôt: 98401137.9
(22) Date de dépôt: 12.05.1998
(51) Int. Cl.: G01K 1/02

(54) **Thermomètre à sonde jetable**

(30) Priorité: 12.05.1997 FR 9705757
(71) Demandeur: Etat-Francais représenté par le Délégué Général pour L'Armement, 00460 Armées (FR)
(72) Inventeur: Cure, Michel, 69500 Bron (FR); Caterini, Richard, 69539 Orlienas (FR)

(57) **Abrégé**

La présente invention concerne le domaine des thermomètres à usage biomédical destinés à la mesure précise de la température corporelle d'un sujet, que ce soit un patient ou un sujet sain.

Elle a plus particulièrement pour objet un thermomètre électronique comportant une sonde de température (2) qui fournit un signal représentatif de la température mesurée et caractérisé en ce qu'il comporte des moyens (4, 6, 10) aptes à enregistrer le signal issu de la sonde de température.

## Description

La présente invention concerne le domaine des thermomètres à usage biomédical destinés à la mesure précise de la température corporelle d'un sujet, que ce soit un patient ou un sujet sain (pour des études ergonomiques ou des recherches).

Elle a plus particulièrement pour objet un thermomètre constitué d'une sonde jetable à laquelle est relié un module autonome de faible encombrement destiné à l'acquisition et à la restitution de la température corporelle.

La mesure précise et le contrôle très strict de la température corporelle reste indispensable pour un médecin ou pour un physiologiste ou bien encore pour un ergonome cherchant à étudier les variations de la température d'un sujet.

La mesure de la température corporelle peut être réalisée au moyen d'un thermomètre au mercure de type connu. Un tel thermomètre a l'avantage d'être très précis dans une gamme de température autour de 37°C. La précision des mesures est de l'ordre du dixième de degré.

L'inconvénient majeur du thermomètre à mercure est l'impossibilité d'un suivi au cours du temps et à des intervalles proches, de l'ordre de la minute, de l'évolution de la température corporelle du patient.

En effet un suivi efficace de l'évolution de la température corporelle du patient nécessiterait la présence permanente d'un médecin ou d'un infirmier qui effectuerait la procédure suivante :
- mise en contact du thermomètre avec le corps du patient,
- attente de la stabilisation thermique du thermomètre,
- séparation du thermomètre du corps du patient,
- lecture de la mesure,
- consignation sur la fiche du patient...etc.

Cette procédure étant très contraignante, on se contente d'une prise de mesure environ trois fois par jour.

Un autre inconvénient du thermomètre à mercure provient du fait qu'il ne soit pas jetable pour une raison évidente de coût, ce qui entraîne des problèmes d'aseptisation du thermomètre.

On peut aussi effectuer la mesure de la température corporelle au moyen d'un thermomètre électronique. Un tel thermomètre, pour des raisons de coût et d'encombrement, utilise un capteur de température qui est une thermistance c'est à dire un oxyde semi-conducteur dont on mesure la variation de résistance en fonction de la température.

L'inconvénient majeur d'un tel thermomètre est son manque de précision. En effet une mesure au demi degré près ne permet pas d'apprécier les variations fines de la température.

La présente invention a pour objectif de pallier les inconvénients précités en proposant un thermomètre précis à sonde jetable comportant un module électronique de faible encombrement, de grande autonomie et de faible coût pour l'acquisition puis la restitution en temps réel ou différé de la température corporelle.

Un autre but de l'invention est l'élimination de la procédure d'étalonnage du thermomètre par l'utilisateur chaque fois qu'une sonde est remplacée.

Un autre but de l'invention est la portabilité des mesures.

Selon l'invention, le thermomètre électronique comporte une sonde de température qui fournit un signal représentatif de la température mesurée, un moyen de gestion des informations contenues dans le signal représentatif de la température mesurée et un moyen de stockage de ces informations, caractérisé en ce que la sonde de température comporte un capteur auquel est associé une piste en carbone apte à le calibrer.

Le thermomêtre peut en outre comporter l'une ou plusieurs des caractéristiques suivantes :
- la sonde est jetable
- le capteur est un capteur silicium
- le capteur est constitué par un transistor, evnetuellement un transistor NPN connecté en diode

Selon l'invention, le thermomètre est muni d'un prolongateur qui peut être souple et qui constitue par sa partie distale un embout sensible recevant le capteur de température.

Selon une caractéristique particulière, cet embout terminal peut être désolidarisé du module électronique et constitue ainsi ladite sonde jetable.

le capteur est Selon une caractéristique particulière, ce capteur est soit enrobé, soit encapsulé.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 montre un schéma général du thermomètre électronique selon l'invention,
la figure 2 représente le schéma de la sonde jetable avec l'électronique de correction intégrée selon l'invention,
la figure 3 montre le schéma du module électronique principal selon l'invention,
la figure 4 représente l'interface entre le thermomètre selon l'invention et des moyens de traitement extérieurs.

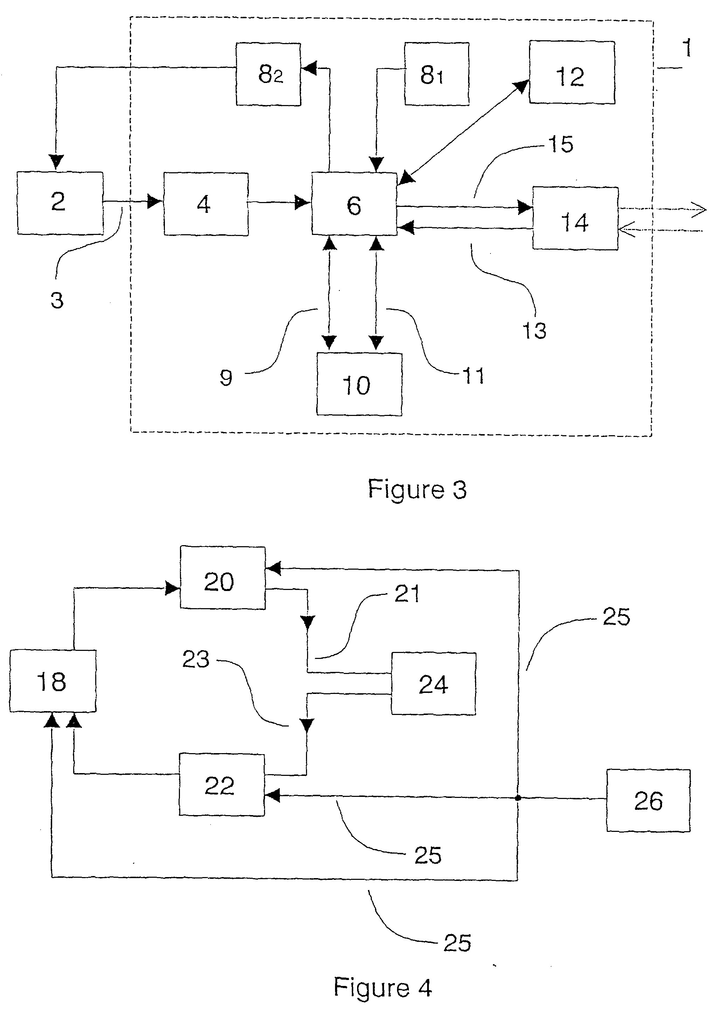

La figure 1 représente le schéma général du thermomètre électronique selon l'invention.

La sonde de température 2 est relié à un module électronique 1. Ce module électronique 1 comporte des moyens 4, 6, 10 aptes à enregistrer le signal issu de la sonde de température, un moyen d'alimentation 8, un moyen d'affichage des informations 12 et un moyen de transfert des informations 14.

La sonde de température 2, qui comprend un capteur de température dont la résistance varie en fonction de la température, fournit un signal représentatif de la température mesurée. Ledit signal est amené vers l'entrée d'un moyen de traitement des mesures 4, qui est connecté à un moyen de gestion 6. Ledit signal est converti par le moyen de traitement 4 et par le moyen de gestion 6 en une information représentative de la température mesurée.

Eventuellement le moyen de traitement des mesures 4 peut être intégré à la sonde de température 2.

L'énergie nécessaire à l'ensemble du dispositif est fourni par des moyens d'alimentation 8 directement reliés au moyen de gestion 6.

Le moyen de gestion 6 commande la prise d'une mesure de température par la sonde de température 2.

Le moyen de gestion 6 est connecté à un moyen de stockage des informations 10, dont le rôle est la mémorisation des mesures de température pendant un temps indéfini.

Un moyen d'affichage des informations 12, connecté au moyen de gestion 6, permet à un utilisateur de lire directement la température mesurée.

Un moyen de transfert des informations 14 relié au moyen de gestion 6 permet de transférer tout ou partie des informations mémorisées, par le moyen de stockage des informations 10, vers un moyen de traitement extérieur 16. Selon un mode de réalisation préférentiel, une communication radiofréquence est établi entre le moyen de transfert des informations 14 et le moyen de traitement extérieur 16.

Dans un autre mode de réalisation, le moyen de stockage 10 peut être démonté du module électronique et être connecté au moyen de traitement extérieur 16.

Le moyen de traitement extérieur 16 permet à un opérateur d'effectuer un ensemble d'opération sur les mesures de température enregistrées telle que des statistiques ou un suivi à long terme de l'évolution de la température du patient.

Selon un mode de réalisation particulier, le moyen de gestion 6 est un microprocesseur, le moyen de stockage 10 est une mémoire, le moyen de traitement 4 comporte un convertisseur analogique-numérique et le moyen de traitement extérieur 16 est un micro-ordinateur.

La figure 2 représente la sonde jetable avec son électronique de correction intégrée, selon un mode particulier de réalisation.

Le capteur de température RT est un capteur silicium auquel est associé une piste en carbone apte à aligner les caractéristiques ohmiques du capteur, c'est-à-dire à calibrer sa résistance.

Plus particulièrement, le capteur RT est constitué par un transistor NPN connecté en diode, la base et le collecteur étant en court-circuit. L'émetteur est connecté à une piste en carbone R3 constitutive d'une résistance variable. Les dimensions de cette piste sont d'une dizaine de millimètres de longueur et de quelques millimètres de largeur. La variabilité de cette résistance R3 est obtenue par micro-usinage. En effet, afin d'avoir une tension donnée aux bornes du capteur et égale pour tous les capteurs fabriqués, et ce quelque que soit la valeur de la résistance intrinsèque du transistor utilisé, le calibrage est réalisé par ajustage de la résistance de la piste de carbone à l'aide, préférentiellement, d'un faisceau laser focalisé.

Chaque sonde est calibrée séparément et comporte sa propre électronique de calibrage, qui comprend un générateur de courant, une référence de tension CI4, un amplificateur de tension CI2, un amplificateur de plage de mesure CI1 et un générateur de courant CI3.

Comme conséquence de la précision inhérente à la technique de fabrication, l'interchangeabilité des sondes est très bonne. Ainsi la précision des mesures est excellente et l'utilisateur du thermomètre n'a plus à ce soucier du calibrage de la sonde.

L'amplificateur opérationnel, qui possède une haute impédance d'entrée et une basse impédance de sortie, est monté en amplificateur de tension non inverseur. Il permet le calibrage de l'amplification du signal et de l'amplitude de la plage de mesure.

L'ensemble de la sonde comprenant le capteur de température et l'électronique de correction est intégré dans une gaine siliconée et constitue un prolongateur souple, qui peut être désolidarisé du module électronique 1 qui comprend le moyen de traitement des mesures 4, le moyen de gestion 6, le moyen de stockage d'informations 10, le moyen d'affichage des informations 12, le moyen de transfert d'informations 14 et l'alimentation 8.

Dans un but d'économie d'énergie, l'alimentation V1 est périodiquement fournie par le module électronique. On obtient, par exemple, une économie d'énergie importante pour un rapport cyclique de 1/100.

Dans un exemple avantageux de réalisation, comme montré à la figure 2, on peut utiliser :
- une résistance R1 variable de 4,7kΩ,
- une résistance R2 variable de 2,7kΩ,
- une résistance R3 variable de 1kΩ (équivalent à la piste carbone ajustée par laser),
- une résistance R4 de 33kΩ,
- une résistance R5 de 10kΩ,
- une résistance R6 de 9kΩ,
- une résistance R7 de 19kΩ,
- une résistance R8 de 3300kΩ,
- une résistance R9 de 33kΩ,
- une résistance R10 de 12kΩ.

Toutes les résistances sont précises à 1%.
- un capteur silicium RT ajustée à 10kΩ à ±0,1%,
- un condensateur C de 47nF,
- pour CI1, CI2, CI3, un BIFET TL074,
- pour CI4, un MAX 6145.

La tension d'alimentation interne Vcc est générée par le CI4 MAX 6145 à partir du moyen d'alimentation 8 du module électronique 1. Cette tension fournie peut varier (de 4,7V à 7V) sans influencer la mesure.

La référence interne de tension est fixée à 1,2V par les résistances R9 et R10.

Dans cet exemple particulier une variation de 0,1°C correspond à un pas de 19,6mV, la plage de mesure varie de 25°C à 45°C et le signal analogique de sortie S de la sonde varie entre 0,5V et 4,5V.

Eventuellement un convertisseur analogique-numérique peut être intégré dans la sonde de température. Le signal S en sortie de la sonde sera numérique et donc directement exploitable par le moyen de gestion 6.

L'ensemble du circuit qui vient d'être décrit se trouve intégré, au moins en partie, dans un prolongateur qui peut être souple et qui constitue par sa partie distale un embout sensible recevant le capteur de température. Cet embout est réalisé dans un matériau biocompatible comme du silicone ou du téflon. Le prolongateur comporte à son autre extrémité une prise trois broches, qui permet de connecter la sonde de température au module électronique.

La figure 3 représente le schéma du module électronique principal, selon un mode particulier de réalisation.

La sonde de température 2, qui est connectée au module électronique principal 1 par l'intermédiaire d'une prise trois broches 3 (par exemple une prise 71430-030 type FE7 de FARNELL), fournit un signal analogique S. Ledit signal va être numérisé par le convertisseur analogique-numérique 4 (par exemple un CAN 8bits) afin d'être directement traité par un microprocesseur ou un ASIC 6.

Chaque mesure peut être visualisée au moyen d'un afficheur LCD 12, relié au microprocesseur 6.

L'ensemble des mesures est stocké dans une mémoire RAM ou de préférence une EEPROM 10 (par exemple de 256 octets de type ST24CO2AB1 256x8 ou x25020P) connectée au microprocesseur 6 par l'intermédiaire d'un bus de commande 9 et d'un bus de données 11. L'intérêt d'utiliser une EEPROM réside dans le fait que les informations ne sont pas perdues même si l'alimentation disparaît.

Le microprocesseur 6 est lié à une antenne 14 qui permet l'émission série des informations 15 après réception de la commande de vidage de mémoire 13.

L'alimentation de l'ensemble du module électronique est assurée de préférence par une cellule photovoltaïque 8₁ reliée à un condensateur et un convertisseur CC de type MAX858 par exemple. Du fait de la faible consommation du microprocesseur 6 (au maximum 30µA) et du convertisseur MAX858 (au maximum 10µA), le condensateur permet de suppléer à un manque d'éclairement de la cellule photovoltaïque, pendant quelques dizaines de secondes. Dans un mode particulier de réalisation, un accumulateur de 1,2V, chargé par la cellule photovoltaïque, peut être monté.

L'alimentation périodique 8₂ de la sonde de température 2 est assuré via le microprocesseur 6. Ainsi l'intervalle séparant deux mesures de la température est commandé par l'alimentation périodique, elle-même commandée par le microprocesseur 6.

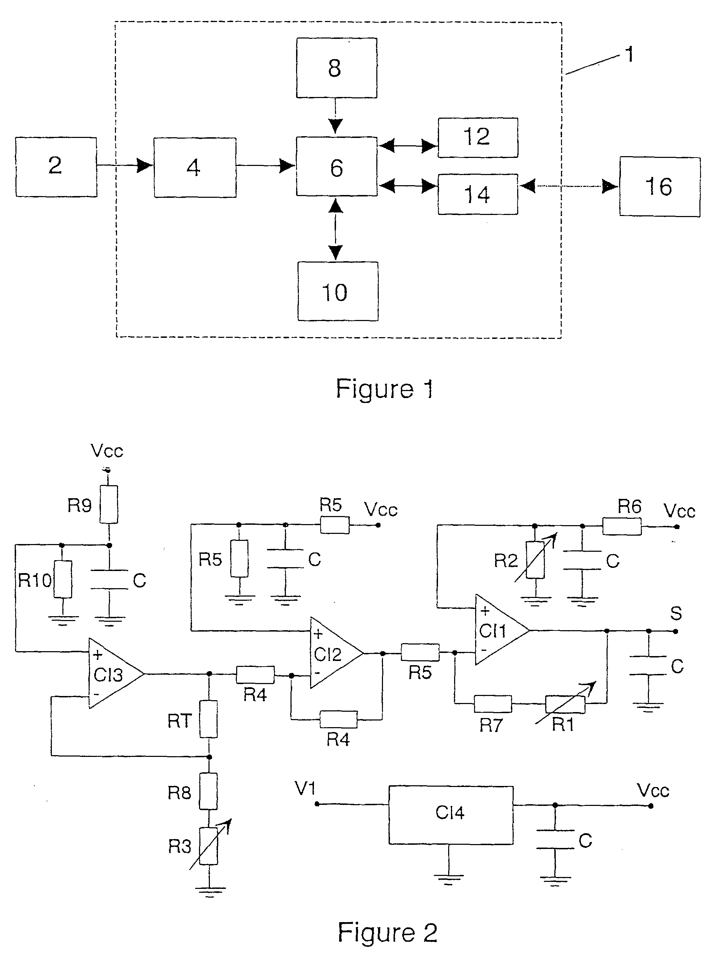

La figure 4 représente l'interface entre le module électronique 1 et un moyen de traitement extérieur 16. Dans un mode particulier de réalisation, le moyen de traitement extérieur 16 est un micro-ordinateur de type PC.

Lorsque l'antenne partagée 18 est utilisée en mode réception, le module de réception 20 est activé et les informations 21 en provenance du thermomètre sont transférées via la prise RS232 24 vers le micro-ordinateur. Lorsqu'un ordre de commande 23 (par exemple un ordre de vidage mémoire), en provenance du micro-ordinateur via la prise RS232 24, active le module d'émission 22, l'antenne partagée 18 est alors utilisée en mode émission et un ordre de commande est envoyé au thermomètre.

Du côté du thermomètre, le moyen de transfert des informations 14 comporte un moyen de réception du signal émis par le moyen de traitement extérieur 16, ledit moyen de réception étant connecté au moyen de gestion 6, ce dernier commandant l'émission des informations enregistrées dans le moyen de stockage 10 lorsqu'un signal est reçu.

La prise parallèle 26 du micro-ordinateur fournit l'alimentation de l'ensemble de l'interface ainsi que la commande de sélection du mode d'émission ou de réception.

## Revendications

1. Thermomètre électronique utilisable chez l'homme pour un usage médical ou d'étude comportant une sonde de température (2) qui fournit un signal représentatif de la température mesurée, un moyen de gestion (6) des informations contenues dans le signal représentatif de la température mesurée et un moyen de stockage (10) de ces informations, caractérisé en ce que la sonde de température comporte un capteur (RT) auquel est associé une piste en carbone (R3) apte à le calibrer.

2. Thermomètre électronique selon la revendication 1, caractérisé en ce que la sonde est jetable.

3. Thermomètre électronique selon l'une quelconque des revendications 1 et 2, caractérisé en ce que le capteur (RT) est un capteur silicium.

4. Thermomètre électronique selon la revendication 3, caractérisé en ce que le capteur silicium est constitué par un transistor.

5. Thermomètre électronique selon la revendication 4, caractérisé en ce que le capteur silicium est constitué par un transistor NPN connecté en diode.

6. Thermomètre électronique selon l'une quelconque des revendications 1 à 5, caractérisé en ce que la sonde comporte une électronique de calibrage, qui comprend un générateur de courant, une référence de tension (CI4), un amplificateur de tension (CI2), un amplificateur de plage de mesure (CI1) et un générateur de courant (CI3).

7. Thermomètre électronique selon l'une quelconque des revendications 1 à 6, caractérisé en ce que le moyen de stockage (10) est amovible, pouvant ainsi être connecté à un moyen de traitement extérieur (16).

8. Thermomètre électronique selon l'une quelconque des revendications 1 à 7, caractérisé en ce qu'il comporte un moyen de transfert des informations (14) permettant l'émission des informations enregistrées dans le moyen de stockage (10) vers un moyen de traitement extérieur (16).

9. Thermomètre électronique selon la revendication 8, caractérisé en ce qu'il comporte un moyen de réception d'un signal émis par un moyen de traitement extérieur (16), ce moyen étant connecté au moyen de gestion (6), ce dernier commandant l'émission des informations enregistrées dans le moyen de stockage (10) lorsqu'un signal est reçu.

10. Thermomètre électronique selon l'une quelconque des revendications 1 à 9, caractérisé en ce que le moyen de gestion (6) est un microprocesseur.

11. Thermomètre électronique selon l'une quelconque des revendications 1 à 10, caractérisé en ce que le moyen de stockage (10) est une mémoire.
